# EUROPÄISCHE PATENTSCHRIFT

(11) **EP 1 571 106 B1**
(45) Veröffentlichungstag und Bekanntmachung des Hinweises auf die Patenterteilung: **25.10.2006**
(21) Anmeldenummer: 05008772.5
(22) Anmeldetag: 19.12.2002
(51) Int. Cl.: B65G 47/61, B65G 33/02, B65G 47/26, B65G 47/28

(54) **Schneckenförderer zum Transport von an Hängeträgern hängendem Fördergut**
Screw conveyor for clothing hangers
Transporteur à vis pour des cintres à vêtements

(30) Priorität: 21.12.2001 DE 10163427
(43) Veröffentlichungstag der Anmeldung: 07.09.2005
(62) Teilanmeldung aus: 02805342.9
(73) Patentinhaber: WF Logistik GmbH, 86899 Landsberg (DE)
(72) Erfinder: Beyer, Rolf Peter, 86842 Türkheim (DE)
(74) Vertreter: Tiesmeyer, Johannes

(56) Entgegenhaltungen:
- EP-A- 0 346 991
- DE-C1- 4 326 024

## Beschreibung

Die Erfindung betrifft einen Schneckenförderer nach dem Oberbegriff des Anspruchs 1.

Schneckenförderer werden beispielsweise zum Transport von an Kleiderbügeln hängenden Kleidungsstücken eingesetzt, etwa im Rahmen einer Hängeförderanlage zur Sortierung und Kommissionierung von Kleidungsstücken. In dem Schneckenförderer werden die Kleiderbügel dabei mit ihren oberen Bügelhaken in einen Schneckengang eingehängt, der an der Außenoberfläche einer Schneckenwelle gebildet ist. Wird die Schneckenwelle um ihre Wellenachse rotatorisch angetrieben, so werden die in dem Schneckengang aufgenommenen Kleiderbügel in Richtung der Wellenachse fortbewegt. Um verschiedene Aufgaben zu erfüllen, kann sich der Schneckengang entlang der Schneckenwelle verzweigen, er kann sich mit einem anderen Schneckengang vereinigen, es können neue Schneckengänge entstehen und dergleichen, weswegen hier allgemein von einem an der Außenoberfläche der Schneckenwelle gebildeten Schnecken- oder Fördergangsystem die Rede ist.

Eine der Aufgaben, die an den Kleiderbügeln während ihres Durchlaufs durch den Schneckenförderer zu erfüllen sind, ist gemeinhin die Vereinzelung der Kleiderbügel. Oft kommt es vor, dass gleichzeitig mehrere Kleiderbügel in eine Windung eines Fördergangs gelangen. Um die Kleiderbügel am ausgabeseitigen Ende des Schneckenförderers einzelweise ausgeben zu können, ist es erforderlich, die Kleiderbügel zu vereinzeln, so dass in einer Gangwindung nicht mehr als ein Kleiderbügel vorhanden ist. Hierzu ist es bekannt, entlang der Schneckenwelle einen Vereinzelungsbereich vorzusehen, der eine zur einzelweisen Förderung der Hängeträger ausgebildete Einzelfördernut aufweist. Die Nutwindungen der Einzelfördernut werden dicht aneinander herangeführt und anschließend wieder auseinandergezogen. In Verbindung mit dem größenmäßig auf die Aufnahme lediglich eines Kleiderbügels abgestimmten Nutquerschnitt der Einzelfördernut wird hierdurch eine wirksame Vereinzelung der Kleiderbügel ermöglicht. Zum Stand der Technik wird z.B. auf die EP O 346 991 A1 verwiesen.

Um eine maximale Förderkapazität des Schneckenförderers zu erzielen, sollte stets jede Nutwindung der Einzelfördernut mit einem Kleiderbügel besetzt werden, so dass keine unbesetzen, leeren Nutwindungen auftreten. Die kontinuierliche Belegung der Nutwindungen der Einzelfördernut hat sich bei bisherigen Schneckenförderern allerdings häufig als problematisch erwiesen.

Aufgabe der Erfindung ist es daher, einen Schneckenförderer der gattungsgemäßen Art anzugeben, der auch bei großer Förderkapazität einen zuverlässigen Betrieb gewährleistet.

Bei der Lösung dieser Aufgabe geht die Erfindung aus von einem Schneckenförderer zum Transport von an Hängeträgern hängendem Fördergut, insbesondere an Kleiderbügeln aufgehängten Kleidungsstücken, umfassend einen um seine Wellenachse drehbar gelagerten Schneckenwellenstrang mit einem an der Außenoberfläche des Schneckenwellenstrangs gebildeten, sich schneckenartig um die Wellenachse windenden Fördergangsystem, in das die Hängeträger mit oberen Trägerhaken einhängbar und darin durch Drehen des Schneckenwellenstrangs in einer Förderrichtung axial förderbar sind, wobei entlang des Schneckenwellenstrangs mindestens ein der Vereinzelung der Hängeträger dienender Vereinzelungsbereich mit einer zur einzelweisen Förderung der Hängeträger ausgebildeten Einzelfördernut gebildet ist.

Erfindungsgemäß ist dabei vorgesehen, dass die Einzelfördernut in dem Vereinzelungsbereich aufeinanderfolgende Nutwindungen aufweist, deren Steigung annähernd gleich oder etwas kleiner als die Materialstärke der Traghaken im Bereich ihres Eingriffs in die Einzelfördernut ist. Zur Erhöhung der Betriebszuverlässigkeit bei hoher Förderkapazität entspringt dabei in dem Vereinzelungsbereich zwischen zwei eng aufeinanderfolgenden Nutwindungen der Einzelfördernut eine weitere Einzelfördernut.

Vorzugsweise bildet das Fördergangsystem zur Einweisung der Hängeträger in die Einzelfördernut einen sich entlang der Windungsrichtung des Fördergangsystems trichterartig verjüngenden Einweisefördergang für die Hängeträger, welcher zumindest auf einem Teil seiner in Windungsrichtung verlaufenden Länge an seinem bezogen auf die Förderrichtung vorderen Rand im Wesentlichen rippenfrei an die Einzelfördernut angrenzt, derart, dass von mehreren in den Einweisefördergang eingelaufenen Hängeträgern bei Drehung des Schneckenwellenstrangs der in Förderrichtung vorauslaufende dieser Hängeträger in die Einzelfördernut einläuft.

Durch die Verjüngung des Einweisefördergangs wird sozusagen ein Trichtereffekt erzielt: die Traghaken der in den Einweisefördergang eingelaufenen Hängeträger werden verdichtet, Lücken zwischen ihnen werden geschlossen oder zumindest verkleinert. Durch diese Bündelung der Traghaken wird gewährleistet, dass stets ein Traghaken zur Einweisung in die Einzelfördernut bereitsteht, weil nämlich die Bündelung der Traghaken bewirkt, dass auf den Traghaken des vorlaufenden Hängeträgers von den nachfolgenden Hängeträgern ein Druck nach vorne, also in Förderrichtung, ausgeübt wird, der den vorlaufenden Hängeträger zuverlässig in die Einzelfördernut einlaufen lässt. Auf diese Weise kann der Schneckenförderer voll ausgelastet werden und eine maximale Fördermenge über den Schneckenförderer transportiert werden. Auch einzeln geförderte Bügel laufen zuverlässig in die Einzelfördernut ein.

Wenn hier von einem Schneckenwellenstrang die Rede ist, so wird darunter sowohl eine durchgehend zusammenhängende Einzelwelle verstanden, die einstückig hergestellt oder aus mehreren gesonderten, jedoch drehfest miteinander verbundenen Wellenstücken aufgebaut sein kann, als auch ein segmentierter Wellenstrang mit mehreren gleichachsig hintereinander angeordneten, relativ zueinander drehbaren Wellensegmenten verstanden. Solche relativ zueinander drehbaren Wellensegmente erlauben es, bei Bedarf verschiedene Abschnitte des Schneckenwellenstrangs mit unterschiedlichen Drehzahlen anzutreiben.

Um die Einweisung des vorlaufenden der Hängeträger in die Einzelfördernut zu erleichtern, kann der Schneckenwellenstrang wenigstens auf einem Teil der Länge des Einweisefördergangs einen vom vorderen Rand des Einweisefördergangs in Richtung zu dessen hinterem Rand hin zunehmenden Wellenradius besitzen, so dass die Hängeträger in dem Einweisefördergang sozusagen auf einer abfallenden Strecke zum vorderen Rand des Einweisefördergangs herabrutschen können.

Gemäß einer Ausführungsform erstreckt sich der Einweisefördergang zwischen zwei benachbarte Nutwindungen der Einzelfördernut hinein, derart, dass von mehreren in den Einweisefördergang eingelaufenen Hängeträgern bei Drehung des Schneckenwellenstrangs der in Förderrichtung vorauslaufende dieser Hängeträger in die vordere Nutwindung der Einzelfördernut einläuft und der unmittelbar nachfolgende Hängeträger in die hintere Nutwindung der Einzelfördernut einläuft. Für Situationen, in denen mehr als zwei Hängeträger zugleich in den Einweisefördergang einlaufen können, wird empfohlen, dass der Einweisefördergang derart gestaltet ist, dass im Fall des Einlaufs von drei oder mehr Hängeträgern in den Einweisefördergang bei Drehung des Schneckenwellenstrangs der in Förderrichtung drittfolgende und ggf. jeder nachfolgende Hängeträger von einer vorderen Gangwindung des Einweisefördergangs in eine unmittelbar nachfolgende Gangwindung des Einweisefördergangs zurückgeworfen werden.

In einigen Fällen kann es genügen, wenn entlang des Schneckenwellenstrangs nur ein einziger Vereinzelungsbereich vorhanden ist. Oftmals muss jedoch selbst nach einer erstmaligen Vereinzelung der Hängeträger mit weiterem Vereinzelungsbedarf gerechnet werden, etwa weil im Rahmen der erstmaligen Vereinzelung nicht alle Hängeträger in je eine eigene Windung des Fördergangsystems eingewiesen werden konnten oder weil im Rahmen nachfolgend an den Hängeträgern durchgeführter Aufgaben eine erneute Anhäufung zweier oder mehr Hängeträger in einer Gangwindung auftreten kann. Es wird deshalb vorgeschlagen, entlang des Schneckenwellenstrangs in gegenseitigem axialen Abstand mindestens zwei Vereinzelungsbereiche zu bilden.

Zweckmäßigerweise wird ein Vereinzelungsbereich in Förderrichtung auf einen Stauförderbereich des Schneckenförderers folgen, in welchem der Schneckenwellenstrang staufähig ausgebildet ist. Dies ermöglicht es, die aufgestauten Hängeträger einzeln aus dem Stau herauszulösen und sie einzeln nachfolgenden Aufgaben zuzuführen. Insbesondere kann der Stauförderbereich ein sekundärer Stauförderbereich sein, der über eine Zwischenförderstrecke aus einem vorgeschalteten primären Stauförderbereich des Schneckenförderers mit Hängeträgern beschickbar ist, wobei dem primären Stauförderbereich ein schaltbarer Stoppanschlag zugeordnet ist, mittels welchem die Hängeträger in dem primären Stauförderbereich aufstaubar sind.

Dem sekundären Stauförderbereich kann dabei ein Staumelder zugeordnet sein, welcher bei Erreichen einer vorbestimmten Staulänge in dem sekundären Stauförderbereich ein Meldesignal bereitstellt. Eine mit dem Staumelder verbundene elektronische Steuereinheit des Schneckenförderers kann dann den Schaltzustand des Stoppanschlags abhängig von dem Meldesignal steuern, so dass stets eine gewisse Menge Hängeträger unter geringem Staudruck an dem Vereinzelungsbereich anstehen kann. Es hat sich gezeigt, dass es eine solche Ausbildung ermöglicht, entlang des Schneckenwellenstrangs mit einem einzigen Stoppanschlag auszukommen.

Ein Vereinzelungsbereich kann aber auch in Förderrichtung auf einen Entfädelungsbereich des Schneckenförderers folgen, in welchem das Fördergangsystem zur Entfädelung überkreuzter Hängeträger ausgebildet ist. Bei der mechanischen Entfädelung überkreuzter Hängeträger kann es nämlich vorkommen, dass zwei oder mehr Hängeträger in einer gemeinsamen Gangwindung des Fördergangsystems den Entfädelungsbereich verlassen und deshalb Vereinzelungsbedarf besteht. Um etwaige verbliebene Überkreuzungen zwischen Hängeträgern beseitigen zu können, kann in Förderrichtung auf den Vereinzelungsbereich ein Überkreuzungserkennungsbereich des Schneckenförderers folgen, welcher zur sensorischen Detektion überkreuzter Hängeträger ausgebildet ist.

Ein Ausführungsbeispiel der Erfindung wird nachfolgend anhand der beigefügten Zeichnungen näher erläutert. Es stellen dar:
- Fig. 1: stark schematisch eine Übersichtsdarstellung eines erfindungsgemäßen Schneckenförderers, und
- Fig. 2-6: in vergrößerter Perspektive verschiedene Drehstellungen eines Wellenstücks eines Schneckenwellenstrangs des Schneckenförderers der Fig. 1 zur Erläuterung eines Lückenschließ- und Vereinzelungsvorgangs, der an Kleiderbügeln vorgenommen wird, die über den Schneckenförderer transportiert werden.

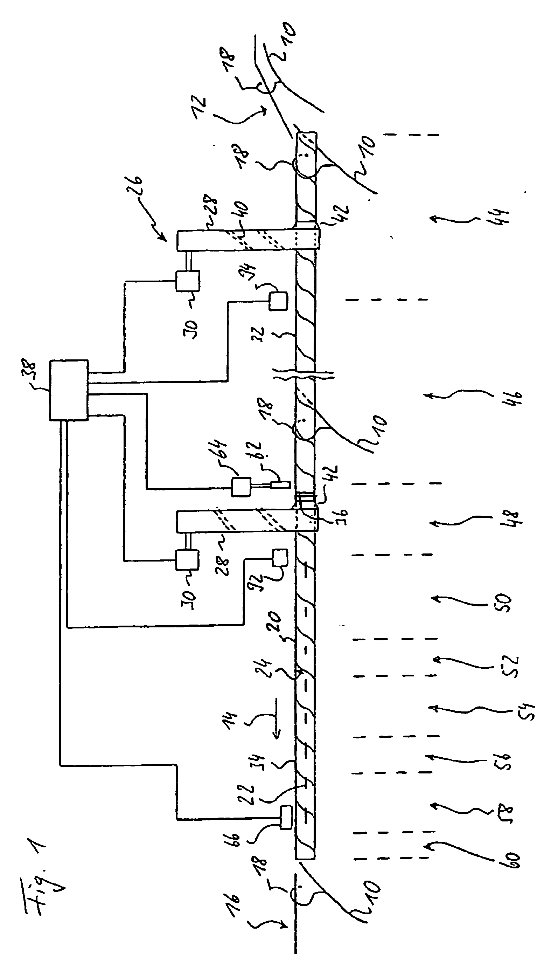

Der in Fig. 1 gezeigte Schneckenförderer dient zum Transport von Hängeträgern 10, welche von einem vorgeschalteten Transportsystem 12 angeliefert und auf den Schneckenförderer übergeben werden. Nachdem sie den Schneckenförderer entlang einer Förderrichtung 14 durchlaufen haben, werden die Hängeträger 10 an ein nachgeschaltetes Transportsystem 16 ausgegeben, das die Hängeträger 10 zu ihrer weiteren Verwendung abtransportiert. Bei den Hängeträgern 10 handelt es sich im vorliegenden Beispielfall um Kleiderbügel, die jeweils einen oberen Bügelhaken 18 aufweisen und mit nicht näher dargestellten Kleidungsstücken behängt sind. Es versteht sich, dass der Schneckenförderer grundsätzlich auch zum Transport beliebiger anderer Hängeträger statt solcher Kleiderbügel dienen kann. Das die Kleiderbügel 10 anliefernde Transportsystem 12 kann beispielsweise ein Klinkenförderer sein, während das die Kleiderbügel 10 wegtransportierende Transportsystem 16 beispielsweise eine Hängefördereinrichtung mit auf Rollen verfahrbaren Einzelbügelträgern sein kann. Zum An- und Abtransport der Kleiderbügel 10 können selbstverständlich auch andere Transportsysteme als die vorgenannten verwendet werden, beispielsweise eine Hängefördereinrichtung mit auf Rollen verfahrbaren Mehrfachbügelträgern, die häufig als Trolleys bezeichnet werden und eine Tragstange aufweisen, an der mehrere Kleiderbügel 10 eingehängt werden können.

Der Schneckenförderer weist einen Schneckenwellenstrang 20 auf, der mit seiner Wellenachse 22 parallel zur Förderrichtung 14 angeordnet ist und um diese Achse 22 drehbar an einer nicht näher dargestellten Tragkonstruktion gelagert ist. An der Außenoberfläche des Schneckenwellenstrangs 20 ist ein sich entlang der Wellenachse 22 schneckenartig um diese windendes Fördergangsystem 24 eingearbeitet, in das die Kleiderbügel 10 mit ihren Bügelhaken 18 einhängbar sind. Wird der Schneckenwellenstrang 20 in Rotation um seine Wellenachse 22 versetzt, so werden die daran hängenden Kleiderbügel 10 in Achsrichtung fortbewegt. In der schematischen Zeichnung der Fig. 1 ist das Fördergangsystem 24 so dargestellt, als ob es lediglich einen einzigen Förder- oder Schneckengang aufweisen würde, der sich mit gleichbleibender Steigung über die gesamte Länge des Schneckenwellenstrangs 20 erstreckt. Diese Darstellungsweise dient jedoch lediglich der Vereinfachung; es versteht sich, dass das Fördergangsystem 24 zumindest abschnittsweise mehrere nebeneinander verlaufende Schneckengänge aufweisen kann und dass die Steigung jedes Schneckengangs entlang der Wellenachse 22 veränderlich sein kann. Insbesondere können entlang des Schneckenwellenstrangs 20 Verzweigungs- oder Vereinigungsstellen vorhanden sein, an denen sich ein Schneckengang verzweigt bzw. zwei Schneckengänge zusammenlaufen. Durch Variation der Gangsteigung oder/und der Anzahl der Schneckengänge können verschiedene Aufgaben erfüllt werden, die an den Kleiderbügeln 10 vorgenommen werden sollen, während sie den Schneckenförderer durchlaufen.

Zum Drehantrieb des Schneckenwellenstrangs 20 dient eine allgemein mit 26 bezeichnete Drehantriebseinrichtung. Diese Drehantriebseinrichtung 26 weist mindestens einen vorzugsweise in axialem Abstand von den Längsenden des Schneckenwellenstrangs 20 angeordneten, flexiblen Antriebsriemen 28 auf, welcher den Schneckenwellenstrang 20 auf einem Teilumfang von dessen Außenoberfläche antriebskraftübertragend, beispielsweise mittels ineinandergreifender Verzahnungen, umschlingt und mittels eines Elektromotorantriebs 30 zum Umlauf in einer endlosen Schleife antreibbar ist. Im vorliegenden Beispielfall der Fig. 1 sind zwei solcher Antriebsriemen 28 gezeigt. Die beiden Antriebsriemen sind in axialem Abstand voneinander angeordnet und treiben unabhängig voneinander je eines von zwei zueinander koaxialen Strangsegmenten 32, 34 des Schneckenwellenstrangs 20 an, die an einer Trennstelle 36 voneinander getrennt sind und unabhängig voneinander um die Wellenachse 22 drehbar sind. Eine den Betrieb des Schneckenförderers steuernde elektronische Steuereinheit 38 erlaubt eine voneinander unabhängige, insbesondere drehzahlveränderliche Steuerung der Antriebe 30.

Auf ihrem Weg durch den Schneckenförderer laufen die Kleiderbügel 10 über die Antriebsriemen 28 hinweg. Um sicherzustellen, dass sie zuverlässig über die Antriebsriemen 28 hinweggeführt werden, weisen die Antriebsriemen 28 auf ihrer schleifenäußeren Seite eine Anordnung zueinander paralleler Förderrillen auf, die sich über die Gesamtbreite des jeweiligen Antriebsriemens 28 erstrecken und schräg zu dessen Umfangsrichtung verlaufen. Zwei solcher Förderrillen sind in Fig. 1 bei dem rechten Antriebsriemen 28 gestrichelt eingezeichnet und dort mit 40 bezeichnet. Die Förderrillen sind so gestaltet und derart zu dem Fördergangsystem 24 des Schneckenwellenstrangs 20 ausgerichtet, dass Kleiderbügel 10, die sich einem der Antriebsriemen 28 nähern, aus dem Fördergangsystem 24 unmittelbar in eine der Förderrillen einlaufen können und sich nach Überqueren des betreffenden Antriebsriemens 28 störungsfrei wieder in das Fördergangsystem 24 des Schneckenwellenstrangs 20 einfädeln können. Zum Ausgleich etwaiger Durchmesserunterschiede kann zumindest auf der Zulaufseite jedes Antriebsriemens 28 ein Anpassring 42 angeordnet sein.

Bei einer bevorzugten Einsatzform des Schneckenförderers können Kleiderbügel 10 in ungeordneten Haufen auf den Schneckenförderer aufgegeben werden, wobei dem Schneckenförderer die Aufgabe zukommt, die Kleiderbügel 10 zu fördern, zu vereinzeln, zu entflechten, zu takten und zu zählen, so dass sie einzeln nacheinander den Schneckenförderer verlassen. Zur Erfüllung dieser Aufgaben ist der Schneckenwellenstrang 20 funktionsmäßig in verschiedene Bereiche unterteilt. Vom in Fig. 1 rechten Längsende des Schneckenwellenstrangs 20 her sind dies nacheinander: ein Übernahmebereich 44, ein großer Staubereich 46, ein Förderbereich 48, ein kleiner Staubereich 50, ein erster Vereinzelungsbereich 52, ein Entfädelungsbereich 54, ein zweiter Vereinzelungsbereich 56, ein Überkreuzungs-Erkennungsbereich 58 sowie ein Übergabebereich 60. Zur Veranschaulichung der Lage dieser Bereiche entlang des Schneckenwellenstrangs 20 sind sie in Fig. 1 durch gestrichelte Linien voneinander abgegrenzt. Es versteht sich, dass eine solche scharfe Abgrenzung nur der Vereinfachung der Darstellung dient und in der Praxis fließende Übergänge zwischen den verschiedenen Funktionsbereichen des Schneckenwellenstrangs 20 vorhanden sein können.

In dem Übernahmebereich 44 werden die Kleiderbügel 10 von dem Transportsystem 12 übernommen und in Förderrichtung 14 zum Staubereich 46 transportiert. Das vordere Ende des Staubereichs 46 wird durch einen Stoppanschlag 62 definiert, der mittels eines Aktuators 64, beispielsweise eine Elektromagnet-Aktuators, zwischen einer Stopp-Stellung, in der er die ankommenden Kleiderbügel 10 aufstaut, und einer Freigabe-Stellung schaltbar ist, in der die Kleiderbügel 10 an ihm vorbeilaufen können. In dem Staubereich 46 ist der Schneckenwellenstrang 20 als sog. Stauförderer ausgebildet, d.h. die Kleiderbügel 10 werden in Förderrichtung 14 weiter gefördert, so lange sie auf keinen Widerstand stoßen. Treffen sie jedoch auf den Stopp-Anschlag 62 oder einen vor ihnen aufgestauten Kleiderbügel, bleiben sie stehen.

Über den Förderbereich 48 gelangen die Kleiderbügel 10 sodann in den Staubereich 50, in dem der Schneckenwellenstrang 20 wiederum staufähig ausgebildet ist. Die Staubildung in dem Staubereich 50 erfolgt nicht durch einen schaltbaren Stopp-Anschlag, sondern wird durch den Vereinzelungsbereich 52 bewirkt, vor dem sich die Kleiderbügel 10 rückstauen, wenn sie in einer die Durchschleuskapazität des Vereinzelungsbereichs 52 übersteigenden Anzahl angeliefert werden.

In dem Vereinzelungsbereich 52 werden etwaig überkreuzte Kleiderbügel 10 detektiert, so dass diese gemeinsam in den Entfädelungsbereich 54 geführt werden können, wo allein durch geeignete Gestaltung des Fördergangsystems 24 eine Entfädelung, d.h. Entkreuzung, überkreuzter Kleiderbügel 10 bewirkt wird. Solche Entfädelungsbereiche sind bei Schneckenförderern an sich bekannt, weswegen von einer näheren Erläuterung abgesehen wird. Nach erneuter Vereinzelung in dem Vereinzelungsbereich 56 werden die Kleiderbügel 10 in dem Überkreuzungserkennungsbereich 58 auf etwaige verbliebene Überkreuzungen zwischen Kleiderbügeln 10 untersucht. Zur Erkennung eines solchen Überkreuzungszustands dient eine mit der Steuereinheit 38 verbundene Sensorik 66. Stellt die Steuereinheit 38 anhand der Signale der Sensorik 66 fest, dass in dem Überkreuzungs-Erkennungsbereich 58 überkreuzte Kleiderbügel 10 vorhanden sind, so bewirkt sie einen Förderstopp und veranlasst die Abgabe eines Warnhinweises, damit eine Bedienungsperson die überkreuzten Kleiderbügel 10 entkreuzen oder entfernen kann. In dem Übergabebereich 60 werden die Kleiderbügel 10 schließlich auf das Transportsystem 16 übergeben.

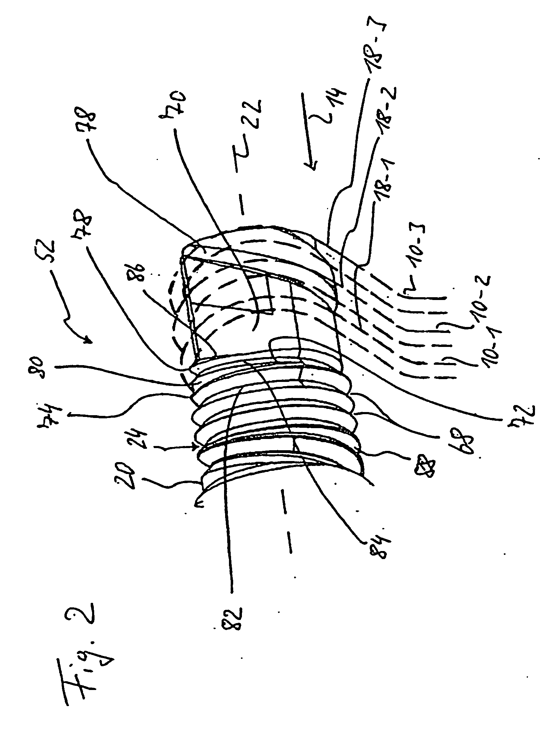

Zur Erläuterung von Aufbau und Wirkungsweise der Vereinzelungsbereiche 52, 56 wird nun auf die Fig. 2-6 verwiesen. Die Vereinzelungsbereiche 52, 56 sind im Wesentlichen identisch aufgebaut, so dass es genügt, einen der Vereinzelungsbereiche 52, 56 zu erläutern. In den Fig. 2-6 ist dies der Vereinzelungsbereich 52.

In dem Vereinzelungsbereich 52 weist das Fördergangsystem 24 eine nachfolgend als Vereinzelungsnut bezeichnete Einzelfördernut 68 auf, deren annähernd V-förmiger Querschnitt so bemessen ist, dass pro Windung nur ein Bügelhaken 18 in der Vereinzelungsnut 68 aufgenommen werden kann. Im Zentralteil des Vereinzelungsbereichs 52 sind die Windungen der Vereinzelungsnut 68 einander eng benachbart; die Nutsteigung entspricht etwa der Materialstärke der Bügelhaken 18 oder ist sogar etwas kleiner. In einem dem Zentralteil vorhergehenden Einlaufteil des Vereinzelungsbereichs 52 ist die Steigung der Vereinzelungsnut 68 größer als im Zentralteil und nimmt in Windungsrichtung allmählich auf den Wert im Zentralteil ab. In einem dem Zentralteil nachfolgenden Auslaufteil nimmt die Steigung der Vereinzelungsnut 68 wieder zu; die Windungen der Vereinzelungsnut 68 entfernen sich dementsprechend wieder voneinander.

Im Einlaufteil des Vereinzelungsbereichs 52 bildet das Fördergangsystem 24 einen aus dem vorhergehenden Funktionsbereich des Schneckenförderes, hier dem Staubereich 50, mit Kleiderbügeln 10 gespeisten Einweisefördergang 70, der nachfolgend Lückenschließgang genannt wird. Der Lückenschließgang 70 windet sich um die Achse 22, vorzugsweise um mehr als eine Windung, und verjüngt sich in Windungsrichtung nach Art eines Trichters, bis er schließlich in einem spitz zulaufenden Verjüngungsende 72 endet. Er bildet eine in Förderrichtung 14 flache Förderbahn für die Kleiderbügel 10, deren radiales Niveau über dem Nutgrund der Vereinzelungsnut 68 liegt. In einem Einweisebereich, der sich über einen Teil der in Windungsrichtung verlaufenden Länge des Lückenschließgangs 70 erstreckt, grenzt an den in Förderrichtung gesehen vorderen Rand des Lückenschließgangs 70 rippenfrei die Vereinzelungsnut 68 an. Ein zum vorderen Rand des Lückenschließgangs 70 geförderter Kleiderbügel 10 kann also in dem Einweisebereich unmittelbar vom Lückenschließgang 70 in die Vereinzelungsnut 68 hineinfallen, ohne hierbei auf eine radiale Erhebung zwischen der Förderbahn des Lückenschließgangs 70 und der Vereinzelungsnut 68 zu treffen und diese überwinden zu müssen.

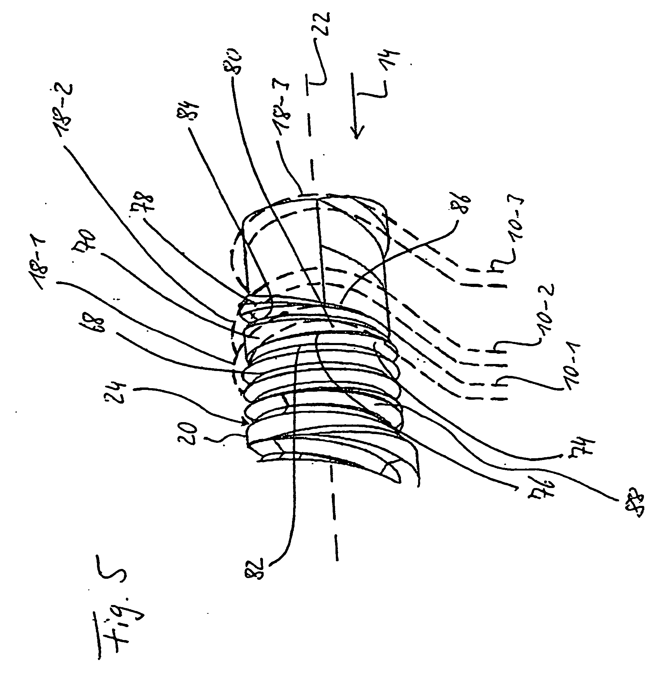

Bezogen auf die Windungsrichtung im Anschluss an den Einweisebereich, jedoch vor dem Verjüngungsende 72 des Lückenschließgangs 70, enstpringt am vorderen Rand des Lückenschließgangs 70 eine Trennrippe 74, die sich über das radiale Niveau der Förderbahn des Lückenschließgangs 70 erhebt und die Vereinzelungsnut 68 vom Lückenschließgang 70 trennt. Diese Trennrippe 74 bewirkt, dass Kleiderbügel 10, sobald sie über den vorderen Rand des Lückenschließgangs 70 in die Vereinzelungsnut 68 eingelaufen sind, in der Vereinzelungsnut 68 gehalten und darin weitertransportiert werden. Der annähernde Ort des Entspringens der Trennrippe 74 ist in Fig. 5 bei 76 gut erkennbar. In Windungsrichtung nach dem Verjüngungsende 72 des Lückenschließgangs 70 bildet die Trennrippe 74 im Zentralteil des Vereinzelungsbereichs 52 eine unmittelbare Trennung zwischen den aufeinanderfolgenden Windungen der Vereinzelungsnut 68.

Bezogen auf die Förderrichtung 14 hinter dem Lückenschließgang 70 erhebt sich wenigstens auf einem wesentlichen Teil der Länge des Lückenschließgangs 70 eine schräg zur Umfangsrichtung des Schneckenwellenstrangs 20 verlaufende Vortriebs- und Verdichtungsrippe 78 über das radiale Niveau der Förderbahn des Lückenschließgangs 70. Die Vortriebs- und Verdichtungsrippe 78 bewirkt bei Drehung des Schneckenwellenstrangs 20 einen axialen Vortrieb der in den Lückenschließgang 70 eingelaufenen Kleiderbügel 10 in Richtung zum vorderen Rand des Lückenschließgangs 70. Da mit zunehmendem Drehwinkel des Schneckenwellenstrangs 20 die axiale Breite des Lückenschließgangs 70 geringer wird, erfolgt zugleich eine Verdichtung der Bügelhaken 18 dieser Kleiderbügel 10. Die Vortriebs- und Verdichtungsrippe 78 ist derart gestaltet, dass anfangs, wenn die axiale Breite des Lückenschließgangs 70 noch vergleichsweise groß ist und der Verdichtungsdruck entsprechend gering ist, die Vortriebs- und Verdichtungsrippe 78 die Kleiderbügel 10 in dem Lückenschließgang 70 halten kann. Ab einer gewissen Verengung des Lückenschließgangs 70 wird der Verdichtungsdruck jedoch so stark, dass ein hinterer Teil aus der Gruppe der in den Lückenschließgang 70 eingelaufenen Kleiderbügel 10 über die Vortriebs- und Verdichtungsrippe 78 hinweg nach hinten in eine vorherige Windung des Lückenschließgangs 70 zurückgeworfen wird.

Schließlich ist in Fig. 2 gut zu erkennen, dass sich der Lückenschließgang 70 mit einem bis zum Verjüngungsende 72 reichenden, endnahen Gangabschnitt 80 in den Raum zwischen zwei benachbarten, in Windungsrichtung aufeinander zulaufenden Windungen 82, 84 der Vereinzelungsnut 68 hinein erstreckt. In diesem endnahen Gangabschnitt 80 ist am vorderen Rand des Lückenschließgangs 70 die Trennrippe 74 bereits entsprungen, der hintere Rand des Lückenschließgangs 70 geht jedoch rippenfrei in die hintere der beiden angesprochenen, benachbarten Nutwindungen der Vereinzelungsnut 68 über, hier also in die Nutwindung 84. Die Vortriebs- und Verdichtungsrippe 78 erstreckt sich entlang des Lückenschließgangs 70 bis annähernd in den Bereich des endnahen Gangabschnitts 80 des Lückenschließgangs 70 und flacht anschließend bis zum völligen Verschwinden ab. Der annähernde Ort des Verschwindens der Vortriebs- und Verdichtungsrippe 78 ist in Fig. 2 bei 86 erkennbar. Durch die Abflachung der Vortriebs- und Verdichtungsrippe 78 wird im Einweisebereich des Lückenschließgangs 70 der rippenfreie Übergang zwischen dem vorderen Rand des Lückenschließgangs 70 und der Vereinzelungsnut 68 geschaffen.

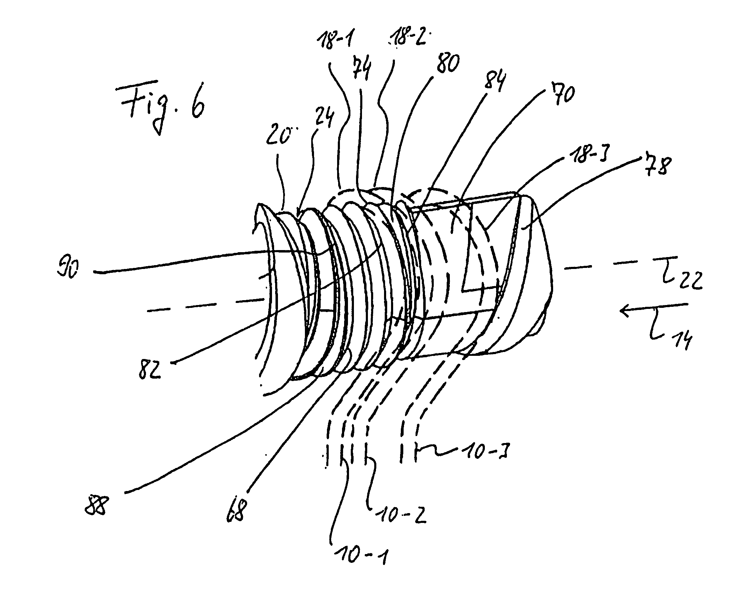

Anhand der Fig. 2-6 soll nun die Wirkungsweise des in vorstehender Weise gestalteten Vereinzelungsbereichs 52 für einen Beispielfall erläutert werden, bei dem drei Kleiderbügel 10 gleichzeitig in den Lückenschließgang 70 einlaufen. Von Figur zu Figur ist der Schneckenwellenstrang 20 dabei jeweils um 90° weitergedreht, so dass Fig. 6 die gleiche Drehstellung des Schneckenwellenstrangs 20 wie Fig. 2 zeigt, jedoch nach einer Weiterdrehung um 360°. Zur besseren Unterscheidbarkeit der drei Kleiderbügel sind diese in den Fig. 2-6 mit 10-1, 10-2 und 10-3 bezeichnet; entsprechend sind ihre Bügelhaken mit 18-1, 18-2 und 18-3 bezeichnet.

In Fig. 2 befinden sich die Kleiderbügel 10-1, 10-2, 10-3 in einem Anfangsabschnitt des Lückenschließgangs 70, in dem die axiale Breite des Lückenschließgangs 70 noch so groß ist, dass keine Verdichtungswirkung auf die Bügelhaken 18-1, 18-2, 18-3 dieser Kleiderbügel ausgeübt wird.

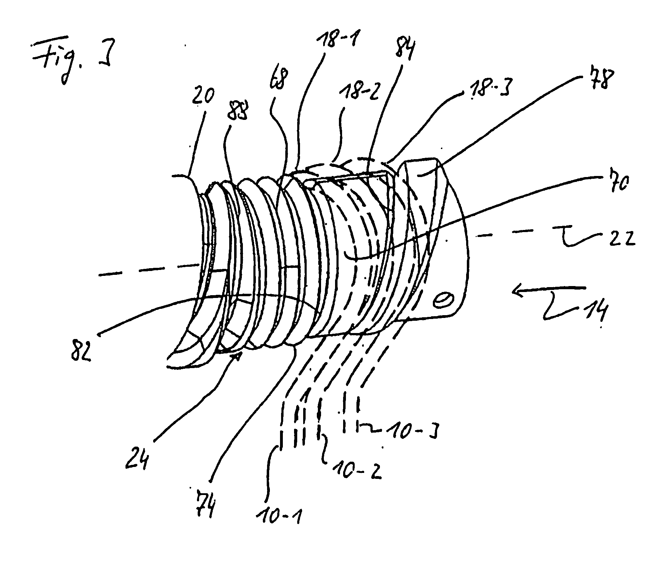

Bei Weiterdrehung des Schneckenwellenstrangs 20 in die in Fig. 3 gezeigte Drehstellung setzt eine langsame Verdichtung der Bügelhaken 18-1, 18-2, 18-3 ein. Diese Verdichtung bewirkt einen nach vorne gerichteten Druck auf den in Förderrichtung 14 vorauslaufenden Bügelhaken 18-1. Durch diesen Druck wird der Bügelhaken 18-1 über den rippenfreien, vorderen Rand des Lückenschließgangs 70 hinweggeschoben und fällt in die Nutwindung 82 der Vereinzelungsnut 68 hinein. Dieser Zustand, bei dem der vorauslaufende Kleiderbügel 10-1 von der Vereinzelungsnut 68 erfasst ist, ist in Fig. 3 gut zu erkennen.

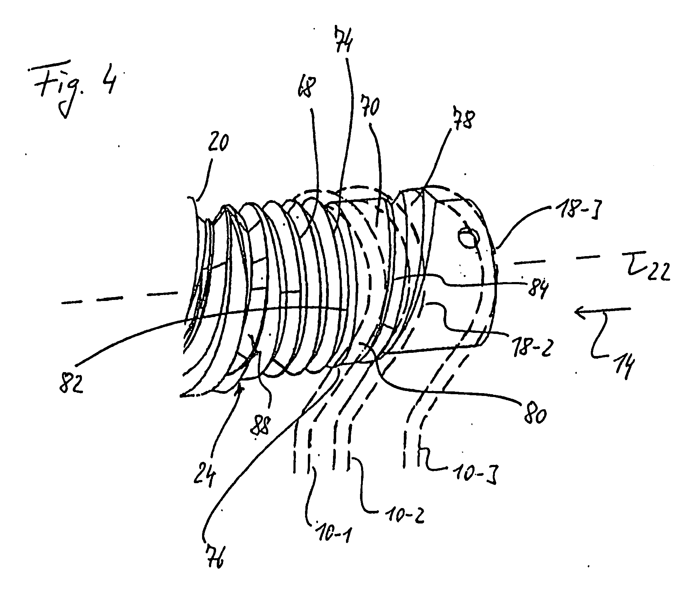

Wird der Schneckenwellenstrang 20 weitergedreht, verengt sich der Lückenschließgang 70 noch mehr. Die beiden im Lückenschließgang 70 verbliebenen Bügelhaken 18-2 und 18-3 erfahren so einen zunehmenden Verdichtungsdruck, der ab einer bestimmten Stärke dazu führt, dass der hintere Bügelhaken 18-3 die Vortriebs- und Verdichtungsrippe 78 überwindet und in die vorherige Windung des Lückenschließgangs 70 zurückgeworfen wird. Bei der nächsten Umdrehung des Schneckenwellenstrangs 20 steht der so zurückgeworfene Kleiderbügel 10-3 dann an der Spitze vor etwaigen weiteren Kleiderbügeln, die aus dem Staubereich 50 in den Lückenschließgang 70 eingespeist werden. In Fig. 4 ist der zurückgeworfene Kleiderbügel 10-3 gut zu erkennen.

Bei Weiterdrehung des Schneckenwellenstrangs 20 in die in Fig. 5 gezeigte Drehstellung wird der Lückenschließgang 70 schließlich so schmal, dass auch der Bügelhaken 18-2 des mittleren Kleiderbügels 10-2 von der Vereinzelungsnut 68 erfasst wird. Er rutscht über den hinteren Rand der Förderbahn des Lückenschließgangs 70 in die Windung 84 der Vereinzelungsnut 68. Auf diese Weise entsteht keine Lücke zum erstfolgenden Kleiderbügel 10-1, der in der unmittelbar vorausliegenden Windung 82 der Vereinzelungsnut 68 läuft.

Fig. 6 zeigt den Zustand nach einer vollen Umdrehung des Schneckenwellenstrangs 22. Der vordere Kleiderbügel 10-1 und der mittlere Kleiderbügel 10-2 sind beide in die Vereinzelungsnut 68 eingewiesen und durchlaufen diese lückenlos, d.h. in aufeinanderfolgenden Windungen. Der hintere Kleiderbügel 10-3 wird während der nächsten Umdrehung des Schneckenwellenstrangs 20 in die Windung 82 der Vereinzelungsnut 68 eingewiesen, so dass auch zwischen dem mittleren Kleiderbügel 10-2 und dem hinteren Kleiderbügel 10-3 keine Lücke entsteht. Die nachfolgenden Funktionsbereiche des Schneckenwellenstrangs 20 können so kontinuierlich im Takt mit vereinzelten Kleiderbügeln 10 beschickt werden.

Um die Einweisung des vorderen Kleiderbügels 10-1 in die Windung 82 der Vereinzelungsnut 68 zu erleichtern, ist der Schneckenwellenstrang 20 auf einem Teil der Länge des Lückenschließgangs 70 mit einem axial zum vorderen Rand des Lückenschließgangs 70 hin leicht abnehmenden Wellenradius ausgeführt. Auf diese Weise ergibt sich in dem Lückenschließgang 70 eine vom hinteren Rand zum vorderen Rand hin etwas abschüssige Förderbahn, die es einfacher macht, den vorderen Kleiderbügel 10-1 zum vorderen Rand des Lückenschließgangs 70 hinzudrängen.

Es kann nicht ausgeschlossen werden, dass selbst nach Durchlaufen des Lückenschließgangs 70 Kleiderbügel 10 immer noch gehäuft auftreten, anstatt sauber voneinander separiert in je einer Nutwindung der Vereinzelungsnut 68 gefördert zu werden. Um ein Überlaufen der Vereinzelungsnut 68 zu vermeiden, entspringt zwischen zwei aufeinander folgenden Windungen der Vereinzelungsnut 68 eine weitere Einzelfördernut, die dort mit 88 bezeichnet ist. Der annähernde Ort des Entspringens dieser weiteren Einzelfördernut 88 ist in Fig. 6 mit 90 bezeichnet. Treten überzählige Kleiderbügel 10 auf, die in den Windungen der Vereinzelungsnut 68 keinen Platz haben (also solche Kleiderbügel 10, die die Förderkapazität der Vereinzelungsnut 68 übersteigen), so liegen diese etwas über der Trennrippe 74 zwischen zwei aufeinander folgenden Windungen der Vereinzelungsnut 68. Gelangen solche überzähligen Kleiderbügel 10 dann in den Bereich des Ursprungsorts 90 der weiteren Einzelfördernut 88, so fallen sie unweigerlich in die Einzelfördernut 88 hinein und werden darin weitertransportiert.

Es wird nun nochmals auf Fig. 1 verwiesen. Dort ist bei 92 ein mit der Steuereinheit 38 verbundener Staumelder angedeutet, der eine Meldung an die Steuereinheit 38 schickt, wenn sich die Kleiderbügel 10 im Staubereich 50 bis zu einem vorbestimmten Ort zurückstauen. Abhängig von dem Signal des Staumelders 92 steuert die Steuereinheit 38 den Schaltzustand des Stopp-Anschlags 62. Diese Steuerung erfolgt dergestalt, dass stets eine gewisse Länge des Rückstaus vor dem Vereinzelungsbereich 52 eingehalten wird. Ist die Staulänge kürzer, bewirkt die Steuereinheit 38 eine vorübergehende Öffnung des Stopp-Anschlags 62, so dass Kleiderbügel 10 aus dem großen Staubereich 46 in den kleinen Staubereich 50 nachlaufen können. Erreicht die Staulänge daraufhin wieder eine vorbestimmte Länge, bewirkt die Steuereinheit 38 die Schließung des Stopp-Anschlags 62. Auf diese Weise wird erreicht, dass vor dem Vereinzelungsbereich 52 stets eine gewisse Menge Kleiderbügel 10 unter vergleichsweise geringem Staudruck ansteht.

Ein weiterer Staumelder 94 dient zur Detektion der Staulänge im großen Staubereich 46. Abhängig von seinem Meldesignal steuert die Steuereinheit 38 die Beschickung des Schneckenförderers mit Kleiderbügeln 10. Zum Betrieb des Schneckenförderers genügen so insgesamt ein Stopp-Anschlag und ein Staumelder.

## Patentansprüche

1. Schneckenförderer zum Transport von an Hängeträgern (10) hängendem Fördergut, insbesondere an Kleiderbügeln aufgehängten Kleidungsstücken, umfassend einen um seine Wellenachse (22) drehbar gelagerten Schneckenwellenstrang (20) mit einem an der Außenoberfläche des Schneckenweitenstrangs (20) gebildeten, sich schneckenartig um die Wellenachse (22) windenden Fördergangsystem (24), in das die Hängeträger (10) mit oberen Trägerhaken (18) einhängbar und darin durch Drehen des Schneckenwellenstrangs (20) in einer Förderrichtung (14) axial förderbar sind, wobei entlang des Schneckenwellenstrangs (20) mindestens ein der Vereinzelung der Hängeträger (10) dienender Vereinzelungsbereich (52,56) mit einer zur einzelweisen Förderung der Hängeträger (10) ausgebildeten Einzelfördernut (68) gebildet ist,
**dadurch gekennzeichnet, dass** die Einzelfördernut (68) in dem Vereinzelungsbereich (52,56) aufeinanderfolgende Nutwindungen aufweist, deren Steigung annähernd gleich oder etwas kleiner als die Materialstärke der Traghaken (18) im Bereich ihres Eingriffs in die Einzelfördernut (68) ist, und dass in dem Vereinzelungsbereich (52,56) zwischen zwei eng aufeinanderfolgenden Nutwindungen der Einzelfördernut (68) eine weitere Einzelfördernut (88) entspringt.

2. Schneckenförderer nach Anspruch 1,
**dadurch gekennzeichnet, dass** das Fördergangsystem (24) zur Einweisung der Hängeträger (10) in die Einzelfördernut (68) einen sich entlang der Windungsrichtung des Fördergangsystems (24) trichterartig verjüngenden Einweisefördergang (70) für die Hängeträger (10) bildet, welcher zumindest auf einem Teil seiner in Windungsrichtung verlaufenden Länge an seinem bezogen auf die Förderrichtung (14) vorderen Rand im Wesentlichen rippenfrei an die Einzelfördernut (68) angrenzt, derart, dass von mehreren in den Einweisefördergang (70) eingelaufenen Hängeträgern (10-1,10-2,10-3) bei Drehung des Schneckenwellenstrangs (20) der in Förderrichtung (14) vorauslaufende (10-1) dieser Hängeträger (10-1,10-2,10-3) in die Einzelfördernut (68) einläuft.

3. Schneckenförderer nach Anspruch 2,
**dadurch gekennzeichnet, dass** der Schneckenwellenstrang (20) wenigstens auf einem Teil der Länge des Einweisefördergangs (70) einen vom vorderen Rand des Einweisefördergangs (70) in Richtung zu dessen hinterem Rand hin zunehmenden Wellenradius besitzt.

4. Schneckenförderer nach einem der Ansprüche 1 bis 3,
**dadurch gekennzeichnet, dass** entlang des Schneckenwellenstrangs (20) in gegenseitigem axialen Abstand mindestens und vorzugsweise insgesamt zwei Vereinzelungsbereiche (52,56) gebildet sind.

5. Schneckenförderer nach einem der Ansprüche 1 bis 4,
**dadurch gekennzeichnet, dass** ein Vereinzelungsbereich (52) in Förderrichtung (14) auf einen Stauförderbereich (50) des Schneckenförderers folgt, in welchem der Schneckenwellenstrang (20) staufähig ausgebildet ist.

6. Schneckenförderer nach Anspruch 5,
**dadurch gekennzeichnet, dass** der Stauförderbereich (50) ein sekundärer Stauförderbereich ist, der über eine Zwischenförderstrecke (48) aus einem vorgeschalteten primären Stauförderbereich (46) des Schneckenförderers mit Hängeträgern (10) beschickbar ist, wobei dem primären Stauförderbereich (46) ein schaltbarer Stoppanschlag (62) zugeordnet ist, mittels welchem die Hängeträger (10) in dem primären Stauförderbereich (46) aufstaubar sind.

7. Schneckenförderer nach Anspruch 6,
**dadurch gekennzeichnet, dass** dem sekundären Stauförderbereich (50) ein Staumelder (92) zugeordnet ist, welcher bei Erreichen einer vorbestimmten Staulänge in dem sekundären Stauförderbereich (50) ein Meldesignal bereitstellt, und dass eine mit dem Staumelder (92) verbundene elektronische Steuereinheit (38) des Schneckenförderers den Schaltzustand des Stoppanschlags (62) abhängig von dem Meldesignal steuert.

8. Schneckenförderer nach Anspruch 9,
**dadurch gekennzeichnet, dass** der Stoppanschlag (62) der einzige entlang des Schneckenwellenstrangs (20) vorgesehene Stoppanschlag ist.

9. Schneckenförderer nach einem der Ansprüche 1 bis 8,
**dadurch gekennzeichnet, dass** ein Vereinzelungsbereich (56) in Förderrichtung (14) auf einen Entfädelungsbereich (54) des Schneckenförderers folgt, in welchem das Fördergangsystem (24) zur Entfädelung überkreuzter Hängeträger (10) ausgebildet ist.

10. Schneckenförderer nach Anspruch 9,
**dadurch gekennzeichnet, dass** in Förderrichtung (14) auf den Vereinzelungsbereich (56) ein Überkreuzungserkennungsbereich (58) des Schneckenförderers folgt, welcher zur sensorischen Detektion überkreuzter Hängeträger (10) ausgebildet ist.

## Claims

1. A screw conveyor for transporting goods to be conveyed while hanging on hangers (10), in particular items of clothing hanging on clothes hangers, comprising a screw shaft strand (20) rotatably mounted about its shaft axis (22) and having a conveyor thread system (24) which is formed on the outer surface of the screw shaft strand (20) and winds in the manner of a screw around the shaft axis (22), into which the hangers (10) can be hooked with upper hanger hooks (18) and can be conveyed axially therein in a conveying direction (14) as a result of rotation of the screw shaft strand (20), at least one separating region (52, 56) used for separating the hangers (10) and having an individual conveyor groove (68) formed for the individual conveyance of the hangers (10) being formed along the screw shaft strand (20),
**characterized in that**, in the separating region (52, 56), the individual conveyor groove (68) has successive groove turns whose pitch is approximately equal to or somewhat smaller than the material thickness of the hanger hooks (18) in the region of their engagement in the individual conveyor groove (68) and **in that** a further individual conveyor groove (88) arises in the separating region (52, 56), between two closely successive groove turns of the individual conveyor groove (68).

2. Screw conveyor according to claim 1, **characterized in that** the conveyor thread system (24) for directing the hangers (10) into the individual conveyor groove (68) forms a directing conveyor thread (70) for the hangers (10) which tapers in the manner of a funnel along the turns direction of the conveyor thread system (24) and which, at least on part of its length running in the turns direction, at its front edge relative to the conveying direction (14), adjoins the individual conveyor groove (68) in a substantially rib-free manner, in such a way that, of a plurality of hangers (10-1, 10-2, 10-3) that have run into the directing conveyor thread (70), the leading one (10-1) of these hangers (10-1, 10-2, 10-3) in the conveying direction (14) runs into the individual conveyor groove (68) as the screw shaft strand (20) rotates.

3. Screw conveyor according to claim 2, **characterized in that** the screw shaft strand (20), at least on part of the length of the directing conveyor thread (70), has a shaft radius which increases from the front edge of the directing conveyor thread (70) in the direction of its rear end.

4. Screw conveyor according to one of claims 1 to 3, **characterized in that** at least and preferably a total of two separating regions (52, 56) are formed with mutual axial spacing along the screw shaft strand (20).

5. Screw conveyor according to one of claims 1 to 4, **characterized in that** a separating region (52) follows a tailback conveying region (15) of the screw conveyor in the conveying direction (14), in which region the screw shaft strand (20) is constructed so as to be capable of causing a tailback.

6. Screw conveyor according to claim 5, **characterized in that** the tailback conveyor region (50) is a secondary tailback conveyor region, which can be charged with hangers (10) via an intermediate conveyor section (48) from an upstream primary tailback conveyor region (46) of the screw conveyor, a controllable stop (62) being assigned to the primary tailback conveyor region (46), by means of which stop the hangers (10) can be caused to tail back in the primary tailback conveyor region (46).

7. Screw conveyor according to claim 6, **characterized in that** the secondary tailback conveyor region (50) is assigned a tailback detector (92) which, when a predetermined tailback length is reached in the secondary tailback conveyor region (50), provides a feedback signal, and **in that** an electronic control unit (38) of the screw conveyor, connected to the tailback detector (92), controls the switching state of the stop (62) as a function of the feedback signal.

8. Screw conveyor according to claim 9, **characterized in that** the stop (62) is the only stop provided along the screw shaft strand (20).

9. Screw conveyor according to one of claims 1 to 8, **characterized in that** a separating region (56) follows an untangling region (54) of the screw conveyor in the conveying direction (14), in which the conveyor thread system (24) is designed to untangle crossed hangers (10).

10. Screw conveyor according to claim 9, **characterized in that** a crossover detection region (58) of the screw conveyor, which is designed for the detection of crossed over hangers (10) by sensors, follows the separating region (56) in the conveying direction (14).

## Revendications

1. Convoyeur à vis pour le transport de produits accrochés sur des supports de suspension (10), en particulier de vêtements accrochés sur des cintres, comprenant une ligne d'arbre de vis (20) montée tournante autour de son axe (22) avec un système de filets de transport (24) formé sur la surface extérieure de la ligne d'arbre de vis (20), s'enroulant à la manière d'une vis autour de l'axe (22) de l'arbre, et dans lequel les supports de suspension (10) peuvent être accrochés par des crochets supérieurs (18) et y être transportés dans la direction axiale, dans une direction de transport (14), par rotation de la ligne d'arbre de vis (20), au moins une zone de séparation (52, 56) servant à séparer les supports de suspension (10) étant formée le long de la ligne d'arbre de vis (20) avec une gorge de transport individuel (68) réalisée pour le transport individuel des supports de suspension (10), **caractérisé en ce que** la gorge de transport individuel (68) présente dans la zone de séparation (52, 56) des spires successives, dont le pas est à peu près égal ou légèrement inférieur à l'épaisseur de matériau des crochets (18) dans la zone de leur prise dans la gorge de transport individuel (68), et qu'une autre gorge de transport individuel (88) est en ressaut dans la zone de séparation (52, 56) entre deux spires étroitement successives de la gorge de transport individuel (68).

2. Convoyeur à vis suivant la revendication 1, **caractérisé en ce que** le système de filets de transport (24) forme, pour l'affectation des supports de suspension (10) dans la gorge de transport individuel (68), un filet de transport d'affectation (70) pour les supports (10), qui se rétrécit en entonnoir le long de la direction des spires du système de filets de transport (24), lequel filet de transport d'affectation est essentiellement limitrophe sans nervure à la gorge de transport individuel (68) au moins sur une partie de sa longueur s'étendant dans la direction des spires, sur son bord avant rapporté à la direction de transport (14) de telle sorte que, sur plusieurs supports de suspension (10-1, 10-2, 10-3) entrés dans le filet de transport d'affectation (70), le support de suspension avant (10-1), dans la direction de transport (14), de ces supports (10-1, 10-2, 10-3) entre dans la gorge de transport individuel (68) lors de la rotation de la ligne d'arbre de vis (20).

3. Convoyeur à vis suivant la revendication 2, **caractérisé en ce que** la ligne d'arbre de vis (20) présente au moins sur une partie de la longueur du filet de transport d'affectation (70) un rayon d'arbre augmentant du bord avant du filet de transport d'affectation (70) en direction du bord arrière de ce dernier.

4. Convoyeur à vis suivant l'une des revendications 1 à 3, **caractérisé en ce qu'**au moins et de préférence au total deux zones de séparation (52, 56) sont formées le long de la ligne d'arbre de vis (20) à distance mutuelle axiale.

5. Convoyeur à vis suivant l'une des revendications 1 à 4, **caractérisé en ce qu'**une zone de séparation (52) fait suite dans la direction de transport (14) à une zone d'embouteillage (50) du convoyeur à vis, dans laquelle la ligne d'arbre de vis (20) a une configuration apte aux bouchons.

6. Convoyeur à vis suivant la revendication 5, **caractérisé en ce que** la zone d'embouteillage (50) est une zone d'embouteillage secondaire; qui peut être chargée en supports de suspension (10), par l'intermédiaire d'un parcours de transport intermédiaire (48), à partir d'une zone d'embouteillage primaire (46) amont du convoyeur à vis, une butée d'arrêt commutable (62), qui permet d'entasser les supports de suspension (10) dans la zone d'embouteillage primaire (46), étant associée à cette zone (46).

7. Convoyeur à vis suivant la revendication 6, **caractérisé en ce qu'**un avertisseur de bouchon (92) est associé à la zone d'embouteillage secondaire (50), lequel avertisseur fournit un signal d'alarme lorsqu'une longueur de retenue prédéfinie est atteinte dans la zone d'embouteillage secondaire (50), et qu'une unité de commande électronique (38) du convoyeur à vis, reliée à l'avertisseur de bouchon (92), commande l'état de commutation de la butée d'arrêt (62) en fonction du signal d'alarme.

8. Convoyeur à vis suivant la revendication 8, **caractérisé en ce que** la butée d'arrêt (62) est la butée d'arrêt unique prévue le long de la ligne d'arbre de vis (20).

9. Convoyeur à vis suivant l'une des revendications 1 à 8, **caractérisé en ce qu'**une zone de séparation (56) fait suite dans la direction de transport (14) à une zone de démêlage (54) du convoyeur à vis, dans laquelle le système de filets de transport (24) est réalisé pour démêler des supports de suspension (10) entrecroisés.

10. Convoyeur à vis suivant la revendication 9, **caractérisé en ce qu'**une zone d'identification d'entrecroisement (58) du convoyeur à vis, qui est réalisée pour la détection par capteurs de supports de suspension (10) entrecroisés, fait suite dans la direction de transport (14) à la zone de séparation (56).
